# NEUE EUROPÄISCHE PATENTSCHRIFT

(11) **EP 1 774 204 B2**
(45) Veröffentlichungstag und Bekanntmachung des Hinweises auf die Entscheidung über den Einspruch: **21.12.2011**
(45) Hinweis auf die Patenterteilung: 13.02.2008
(21) Anmeldenummer: 05763577.3
(22) Anmeldetag: 01.07.2005
(51) Int. Cl.: F16H 57/02, F16H 1/14

(54) **KEGELRADGETRIEBE**
CONICAL GEAR DRIVE
ENGRENAGE CONIQUE

(30) Priorität: 06.08.2004 DE 102004038581
(43) Veröffentlichungstag der Anmeldung: 18.04.2007
(73) Patentinhaber: Wittenstein AG, 97999 Igersheim (DE)
(72) Erfinder: BAYER, Thomas, 97999 Igersheim (DE); MELBER, Karl-Georg, 97990 Weikersheim-Elpersheim (DE); ENGELBREIT, Michael, 97283 Riedenheim (DE); WILHELM, Thomas, 97993 Creglingen (DE)
(74) Vertreter: Zimmermann & Partner
(86) Internationale Anmeldenummer: PCT/EP2005/007095
(87) Internationale Veröffentlichungsnummer: WO 2006/015664

(56) Entgegenhaltungen:
- EP-A- 0 517 387
- EP-A- 1 326 032
- WO-A1-98/26201
- DE-A1- 10 013 785
- DE-A1- 10 234 749
- DE-A1- 19 917 125
- DE-A1- 19 957 743
- DE-B- 1 284 804
- DE-U- 1 869 226
- FR-A- 2 547 007
- JP-A- 2001 323 967
- US-B1- 6 234 037
- 'Kegelrad-Planetengetriebe bis 300 KW i bis 1000:1' PROSPEKT DER FIRMA WILHELM VOGEL GMBH 01 Juli 1993,
- 'Kegel-Stirnradgetriebe (Auszüge)' PROSPEKT DER FIRMA WILHELM VOGEL GMBH November 2000,
- 'Wälzlager in Industriegetrieben (Seiten 44,45,117,149)' SKF DRUCKSCHRIFT 4560G 1997,
- 'Getriebemotoren' PRODUKTKATALOG, SEW EURODRIVE Juni 2002,

## Beschreibung

Die vorliegende Erfindung betrifft ein Kegelradgetriebe mit einem Antriebselement, welches mit einem Rumpfkegelradgetriebe zusammenwirkt, über welches ein Abtriebselement antreibbar ist.

Kegelradgetriebe bzw. auch als Winkelgetriebe bezeichnet, sind in vielfältiger Form und Ausführung im Markt bekannt und erhältlich. Sie dienen im wesentlichen zum Umleiten von Drehmomenten. Es gibt daher verschiedene Grundbauarten von Kegelradgetrieben, ausgeführt bspw. mit (Hypoidgetriebe) oder ohne (Kegelradgetriebe) Achsversatz. Diese unterscheiden sich im wesentlichen in ihren Antriebsbaugruppen und sind daher unterschiedlich ausgeführt.

Auch sind herkömmliche Kegelradgetriebe bekannt, die in unterschiedlichen Grössen hergestellt werden können und die aufwendig und kompliziert mit unterschiedlichen Baugruppen als jeweils eigenständige Serien hergestellt werden können.

Nachteilig an den bisherigen Kegelradgetrieben ist, dass diese bei der Herstellung eines Kegelradgetriebes mit unterschiedlichen Antrieben in der Regel separate Gehäuse, separate Einheiten sowie separate Fertigungslinien erfordern.

Die EP 0 517 387 A2 offenbart einen Werkzeugadapter, welcher ein Antriebsmoment winklig auf ein Abtriebsmoment umleitet. Dabei wird ein herkömmliches Winkelgetriebe verwendet.

Die EP 1 326 032 A1 offenbart eine Baureihe von unterschiedlich gross dimensionierten Elektromotoren, denen jeweils ein Getriebe abtriebsseitig angeflanscht wird. Das Getriebe ist als eigenständiges Bauteil ausgebildet.

Die US 6,234,037 B1 beschreibt ein modulares Getriebesystem, bei welchem unterschiedliche Elektromotoren an das Getriebe angeschlossen bzw. angeflanscht werden können.

Die DE 102 34 749 A1 offenbart ein Kegelradgetriebe, bei welchem ein Antriebskegelrad 8 in eine an einem Gehäuse gelagerte Antriebswelle eingreift und mit dieser zusammenwirkt.

Die FR-2 547 007 A zeigt ein herkömmliches gewöhnliches Differentialgetriebe, wie es auch im Fahrzeugbereich Anwendung findet. Die JP 2001323967A zeigt ein Kegelradgetriebe gemäß dem Oberbegriff des Anspruchs 1.

Der vorliegenden Erfindung liegt daher die Aufgabe zugrunde, ein universelles Kegelradgetriebe zu schaffen, welches baukastenartig für unterschiedliche Abtriebsvarianten sowie Antriebsvarianten leicht herstellbar ist. Dabei sollen insbesondere kundenspezifische Wünsche sehr schnell realisiert und umgesetzt werden, so dass sehr schnell ein Getriebe kundenspezifisch geliefert werden kann. Ferner soll ein Kegelradgetriebe geschaffen werden, welches kostengünstig in der Herstellung ist. Ferner soll mit ein und demselben Rumpfkegelradantrieb eine Mehrzahl von unterschiedlichen Winkelgetrieben hergestellt werden können, hinsichtlich Antriebsvarianten, hinsichtlich Abtriebsvarianten sowie unterschiedlichen Baugrössen, mit wesentlich denselben Bauteilen.

Zur Lösung dieser Aufgabe führen die Merkmale des Anspruchs 1.

Bei der vorliegenden Erfindung hat sich als besonderes vorteilhaft erwiesen, dass das Kegelradgetriebe im wesentlichen aus einem gemeinsamen, universellen Rumpfkegelradgetriebe gebildet ist, in welchem ein Kegelrad eingesetzt ist und welches dem Kegelrad gegenüberliegend eine Universalschnittstelle I bildet.

Lotrecht zum Kegelrad bzw. zur Universalschnittstelle I ist ein Antriebselement einsteckbar, welches ebenfalls eine Universalschnittstelle II bildet, um unterschiedliche wählbare Antriebe dort anzuflanschen.

Dies bedeutet, dass für alle Kegelradgetriebe mit unterschiedlich wählbaren Antriebselementen und unterschiedlich wählbaren Abtriebselementen durch die Verwendung zweier Universalschnittstellen unterschiedliche, beliebige Kegelradgetriebe mit unterschiedlichen Antriebs- und Abtriebsvarianten hergestellt werden können. Dabei können unterschiedliche Abtriebsvarianten für unterschiedliche Kinematiken, unterschiedliche Abtriebe, bspw. in Bezug auf eine Abtriebswelle oder auf Abtriebsflansche, eingesetzt sein. Gegebenenfalls können über entsprechende Universalschnittstellen und passende Schnittstellen weitere Abtriebsstufen als ein- oder mehrstufig ausgebildete Abtriebsstufen unterschiedlichster Kinematik eingesetzt werden. Diese können als Untersetzungs- oder Übersetzungsgetriebe mit unterschiedlichen Abtrieben, gebildet aus Abtriebswellen oder Abtriebsflanschen, ausgebildet sein.

Gleiches gilt im Antriebsbereich, wobei antriebsseitig in das gemeinsame Antriebselement unterschiedliche Antriebe, ausgebildet als Planetenvorstufen oder Motoranbaugruppen, dort über die Universalschnittstelle II eingesetzt werden können. Auf diese Weise lässt sich mit reduzierten Bauteilen, die auch aus anderen Baukästen herkömmlicher Getriebe verwendet werden können, sehr kostengünstig ein Kegelradgetriebe gewünschter Kinematik und kundenspezifisch herstellen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte teilweise querschnittliche Darstellung eines erfindungsgemässen Kegelradgetriebes, insbesondere Winkelgetriebes in einem Baukastenformat;
Figur 2 eine längsquerschnittliche Darstellung durch einen Bereich des Antriebselementes mit zwei unterschiedlichen einsetzbaren Antrieben;
Figur 3a eine schematisch dargestellte längsquerschnittliche Darstellung durch das Kegelradgetriebe, insbesondere im Bereich einer Universalschnittstelle I mit unterschiedlichen dort einsetzbaren Abtriebselementen;
Figur 3b eine schematisch dargestellte teilweise längsquerschnittliche Darstellung mit weiteren Abtriebsvarianten, wobei über eine Schnittstelle wahlweise unterschiedliche Abtriebsstufen anschliessbar sind.

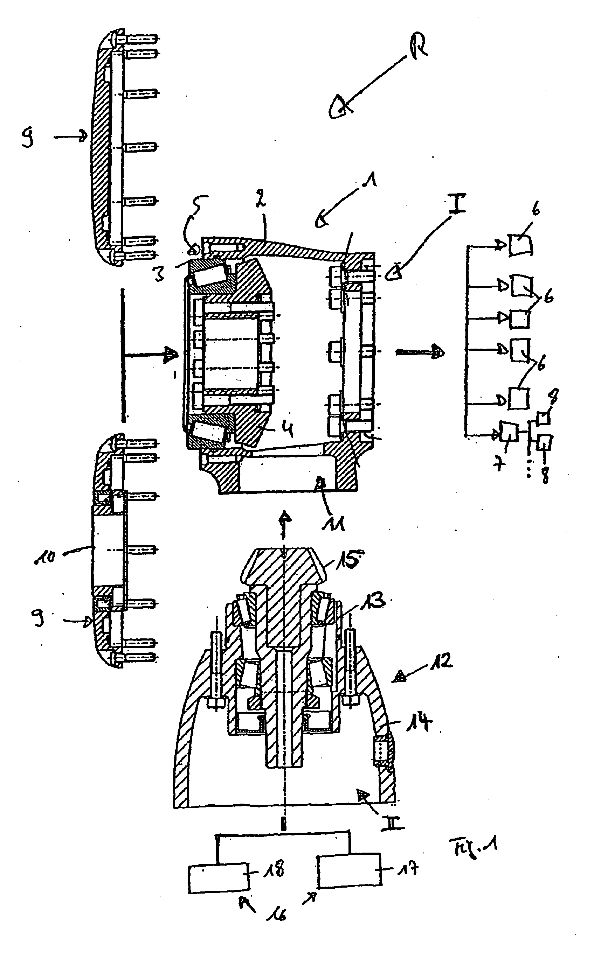

Gemäss Figur 1 weist ein Kegelradgetriebe, ausgebildet als Winkelgetriebe, ein Rumpfkegelradgetriebe 1 auf, welches ein Gehäuse 2 besitzt. In das Gehäuse 2 ist über ein Lager 3 ein Kegelrad 4, gegebenenfalls ausgeführt als hohles Kegelrad, in einer Öffnung 5 eingesetzt.

Der Öffnung 5 gegenüberliegend ist im Gehäuse 2 eine Universalschnittstelle I gebildet, die der Aufnahme sowie auch Zentrierung von beliebigen wählbaren Abtriebselementen 6 dient, wie sie in Figur 1 lediglich schematisch angedeutet sind. Gegebenenfalls kann anstelle eines Abtriebselementes 6 auch eine Schnittstelle 7 mit der Universalschnittstelle I des Rumpfkegelradgetriebes 1 verbunden werden, an welche eine beliebige Anzahl von unterschiedlichen Abtriebsstufen 8 eingesetzt werden können.

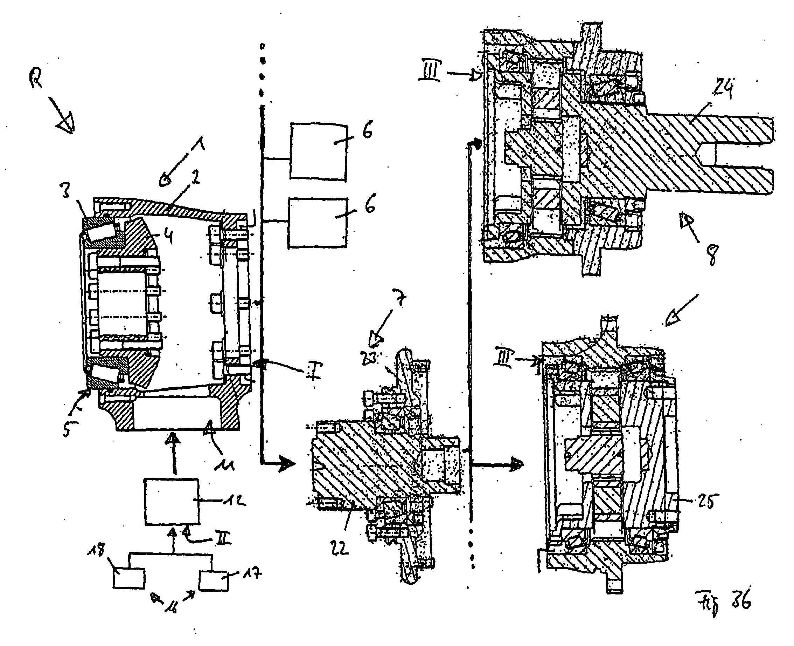

Die Abtriebsstufen 8 können als Untersetzungs- oder Übersetzungsgetriebe ausgebildet sein. Im Rahmen der vorliegenden Erfindung liegt auch, dass die unterschiedlichen Abtriebsstufen mit einer Abtriebswelle über einem Abtriebsflansch 25 (siehe Figur 3b) verbunden sein können. Dabei können unterschiedliche Abtriebsstufen durch die Ausbildung einer Universalschnittstelle III, siehe Figur 3b, mit der Schnittstelle 7 und somit mit dem Rumpfkegelradgetriebe 1 verbunden werden.

Im Bereich der Öffnung 5, insbesondere im Bereich des Kegelrades 4, lassen sich unterschiedliche Deckelelemente 9 universell mit dem Gehäuse 2 verbinden, so dass die Öffnung 5 bei der geschlossenen Ausführung des Deckelementes 9 vollständig geschlossen oder gegebenenfalls durch mit einer Öffnung 10 versehene Deckelelement im Bereich des Kegelrades 4 eine Durchstecköffnung gebildet ist.

In etwa lotrecht zur Öffnung 5 bzw. zur Universalschnittstelle I kann eine Aufnahmeöffnung 11 vorgesehen sein, in welche ein Antriebselement 12 einsteckbar ist. Hierzu weist das Antriebselement 12 ein Gehäuse 14 auf, welches einen Flansch 13 bildet, der mit dem Gehäuse 2 des Rumpfkegelradgetriebes 1, insbesondere mit der Aufnahmeöffnung 11 verbindbar ist. Dabei wird dann das Antriebselement 12 über den Flansch 13 mit der Aufnahmeöffnung 11 exakt zentriert. Gegebenenfalls werden Rumpfkegelradgetriebe 1 sowie Antriebselement 12 miteinander fest verschweisst.

Innerhalb des Gehäuses 14 des Antriebselementes 12 ist eine zumindest teilweise hohl ausgeführte Kegelradwelle 15 in hier nicht näher dargestellten und bezifferten Lager gelagert. Dabei ist die Kegelradwelle 15 aus Kegelritzel und Kegelritzelwelle gebildet.

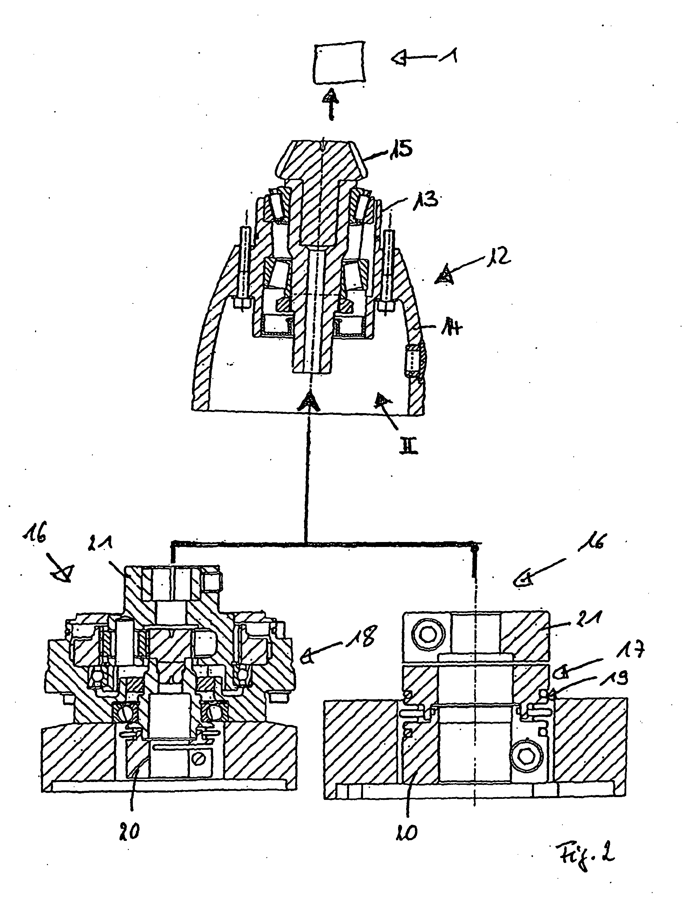

Dem Kegelrad 4 gegenüberliegend ist eine Universalschnittstelle 11 ausgebildet. In die Universalschnittstelle II sind, wie es in Figur 1 nur angedeutet ist, unterschiedliche Antriebe 16 beliebig wählbar einsteckbar. Dabei können die Antriebe 16, wie es in dem Ausführungsbeispiel gemäss Figur 2 dargestellt ist, als Motoranbaugruppe 17 oder Planetenvorstufe 18 ausgebildet sein. Die Motoranbaugruppe 17 als Antrieb 16 weist eine vorzugsweise starre Wellenkupplung 19 auf, an welche ein Wellenflansch 20 zur Aufnahme eines beliebigen Motors, Elektromotors od. dgl. anschliesst.

Die Planetenvorstufe 18 kann als ein- oder mehrstufige Planetenvorstufe 18 ausgebildet sein, wobei diese ebenfalls einen Wellenflansch 20 zur Aufnahme eines Elektromotors od. dgl. aufweist.

Auf diese Weise lässt sich ein unterschiedliches Kegelradgetriebe R herstellen, wenn über ein gemeinsames Antriebselement 12 unterschiedliche Antriebe, ausgeführt als ein- oder mehrstufige Planetenvorstufen 18 oder Motorbaugruppen 17, dort integriert und eingesteckt werden. In entsprechende Abtriebswellen 21 der Motoranbaugruppe 17 bzw. der Planetenvorstufe 18 greifen dann beim Verbinden mit dem Antriebselement 12 die Kegelradwelle 15 bzw. deren Kegelritzelwelle ein, um diese anzutreiben. Dabei kann die Motoranbaugruppe 17 als reine Wellenkupplung bzw. Welle mit Axialkupplung ausgeführt sein.

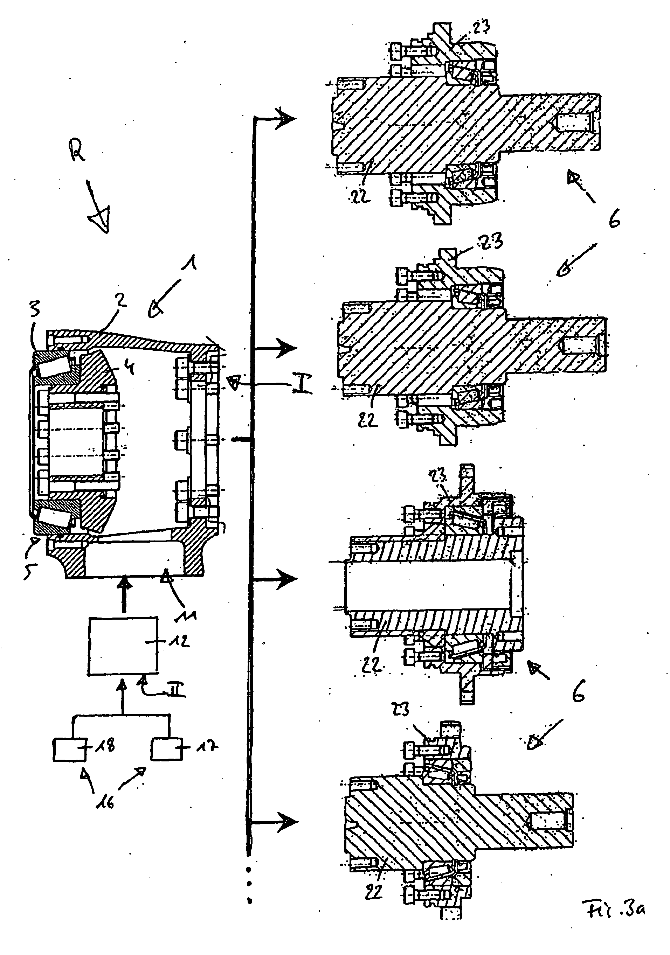

In dem Ausführungsbeispiel der vorliegenden Erfindung gemäss Figur 3a ist das Kegelradgetriebe R im Baukastenformat aufgezeigt, wobei an die Universalschnittstelle II beliebige unterschiedliche Abtriebselemente 6 anschliessbar sind.

Dabei sind die ersten beiden Abtriebselemente 6 für unterschiedliche Abtriebsvarianten gegebenenfalls auch unterschiedlich dimensioniert mit unterschiedlichen Flanschen oder Wellen ausgebildet. Auch können entsprechende Hohlwellen das Abtriebselement 6 bilden.

Es kann vorgesehen sein, dass gewünschte Abtriebsvarianten als Abtriebselemente 6 über die Universalschnittstelle I mit dem Rumpfkegelradgetriebe 1 verbindbar sind, wobei deren Wellen 22, gegebenenfalls auch ausgeführt als Hohlwelle, mit dem Kegelrad 4 des Rumpfkegelradgetriebes 1 verbindbar sind und entsprechende Flansche 23 mit dem Gehäuse 2 des Rumpfkegelradgetriebes 1, insbesondere im Bereich der Universalschnittstelle I, verbindbar sind.

In dem Ausführungsbeispiel gemäss Figur 3b kann auch anstelle eines Abtriebselementes 6 universell und wählbar an die Universalschnittstelle I in oben beschriebener Weise die Schnittstelle 7 eingesetzt sein, welche in oben beschriebener Weise ebenfalls eine Welle 22 sowie einen Flansch 23 aufweist.

An die Schnittstelle 7 lassen sich Abtriebsstufen als Übersetzungs- oder Untersetzungsabtriebsstufen 8 über eine Universalschnittstelle III anflanschen, wobei die jeweiligen Abtriebsstufen 8 hinsichtlich ihrer Kinematik, Abtriebswelle oder Abtriebsflansche unterschiedlich ausgebildet sein. Diese sind auch kundenspezifisch wählbar ausgebildet und über eine universal ausgebildete gemeinsame Schnittstelle 7 mit dem Rumpfkegelradgetriebe 1 verbindbar. Die Abtriebsstufe 8 ist mit einer Abtriebswelle 24 oder einem Abtriebsflansch 25 versehen, wobei entsprechende Übersetzungs- oder Untersetzungsstufen dort integriert sein können.

### Positionszahlenliste

| | | | | | |
|---|---|---|---|---|---|
| 1 | Rumpfkegelradgetriebe | 34 | | 67 | |
| 2 | Gehäuse | 35 | | 68 | |
| 3 | Lager | 36 | | 69 | |
| 4 | Kegelrad | 37 | | 70 | |
| 5 | Öffnung | 38 | | 71 | |
| 6 | Abtriebselement | 39 | | 72 | |
| 7 | Schnittstelle | 40 | | 73 | |
| 8 | Abtriebsstufen | 41 | | 74 | |
| 9 | Deckelelemente | 42 | | 75 | |
| 10 | Öffnung | 43 | | 76 | |
| 11 | Aufnahmeöffnung | 44 | | 77 | |
| 12 | Antriebselement | 45 | | 78 | |
| 13 | Flansch | 46 | | 79 | |
| 14 | Gehäuse | 47 | | | |
| 15 | Kegelradwelle | 48 | | R | Kegelradgetriebe |
| 16 | Antrieb | 49 | | | |
| 17 | Motoranbaugruppe | 50 | | | |
| 18 | Planetenvorstufe | 51 | | | |
| 19 | Wellenkupplung | 52 | | | |
| 20 | Wellenflansch | 53 | | I | Universalschnittstelle |
| 21 | Abtriebswelle | 54 | | II | Universalschnittstelle |
| 22 | Welle | 55 | | III | Universalschnittstelle |
| 23 | Flansch | 56 | | | |
| 24 | Abtriebswelle | 57 | | | |
| 25 | Abtriebsflansch | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Kegelradgetriebe mit einem Antriebselement (12), welches mit einem Rumpfkegeiradgetriebe (1) zusammenwirkt, über welches ein Abtriebselement (6) antreibbar ist, wobei
an das Rumpfkegelradgetriebe (1) das Antriebselement (12) mit einer Universalschnittstelle (II) anschließbar ist, an welche unterschiedlich wählbare Antriebe (16), wie bspw. eine Motoranbaugruppe (17) oder Planetenvorstufe (18), anschließbar sind, wobei das Antriebselement (12) mit einer Kegelradwelle (15) in das Rumpfkegelradgetriebe (1) einsteckbar ist, wobei die Kegelradwelle (15) mit dem Kegelrad (4) des Rumpfkegelradgetriebes (1) zusammenwirkt, und anderenends der Kegelradwelle (15) eine Universalschnittstelle (II) zum Einsetzen beliebiger Antriebe (16), als Motoranbaugruppe (17) oder Planetenvorstufe (18) ausgebildet, vorgesehen ist, wobei über das Gehäuse (14) des Antriebselementes (12) im Bereich der Universalschnittstelle (II) der Antrieb (16) bzw. die Motoranbaugruppe (17) oder die Planetenvorstufe (18) zentriert ist und in eine entsprechende Antriebswelle (21) des Antriebs (16) die Kegelradwelle (15) des Antriebselements (12) eingreift bzw. mit dieser zusammenwirkt, **dadurch gekennzeichnet, dass** die Motoranbaugruppe (17) oder die Planetenvorstufe als Antrieb (16) eine Wellenkupplung (19) aufweist, an welche ein Wellenflansch (20) zur Aufnahme eines beliebigen Motors anschließt.

2. Kegelradgetriebe nach Anspruch 1, **dadurch gekennzeichnet, dass** das Rumpfkegelradgetriebe (1) abtriebsseitig mit einer Universalschnittstelle (I) zum Anflanschen von beliebigen Abtriebselementen (6) versehen ist.

3. Kegelradgetriebe nach Anspruch 2, **dadurch gekennzeichnet, dass** die Abtriebsstufen (8) als Übersetzungsstufen für unterschiedliche Abtriebe, z. B. betreffend Abtriebsflansch (25) oder Abtriebswelle (24), ausgebildet sind.

4. Kegelradgetriebe nach Anspruch 2, **dadurch gekennzeichnet, dass** die Abtriebsstufen (8) als Untersetzungsstufen für unterschiedliche Abtriebe, z. B. betreffend Abtriebsflansch (25) oder Abtriebswelle (24), ausgebildet sind.

5. Kegelradgetriebe nach wenigstens einem der Anspruche 1 bis 4, **dadurch gekennzeichnet, dass** die Abtriebselemente (6), insbesondere deren Flansche (23), mit der Universalschnittstelle (I) des Rumpfkegelradgetriebes (1), insbesondere dessen Gehäuse (2), verbindbar sind, wobei eine Welle (22) mit dem Kegelrad (4) des Rumpfkegelradgetriebes (1) fest oder wiederlösbar verbindbar ist.

6. Kegelradgetriebe nach wenigstens einem der Ansprüche 1 bis 4, **dadurch gekennzeichnet, dass** unterschiedliche Abtriebselemente (6) anwenderspezifisch in unterschiedlicher Größe an ein und dieselbe Universalschnittstelle (I) des universellen Rumpfkegelradgetriebes (1) anschließbar sind.

7. Kegelradgetriebe nach wenigstens einem der Ansprüche 1 bis 6, **dadurch gekennzeichnet, dass** eine als Antrieb (16) ausgeführte Motoranbaugruppe (17) mit einer Welle, Wellenkupplung (19) und einem Wellenflansch (20) versehen ist.

8. Kegelradgetriebe nach wenigstens einem der Ansprüche 1 bis 7, **dadurch gekennzeichnet, dass** die als Antrieb (16) ausgebildete Planetenvorstufe (18) ein Gehäuse aufweist, welches mit dem Gehäuse (14) des Antriebes (12), insbesondere der Universalschnittstelle (II) des Antriebes (12), verbindbar, insbesondere zentrierbar ist, wobei in eine Abtriebswelle (21) der Planetenvorstufe (18) die Kegelradwelle (15) des Antriebes (12) eingreift.

9. Kegelradgetriebe nach wenigstens einem der Ansprüche 1 bis 8, **dadurch gekennzeichnet, dass** in das Antriebselement (12) als Antriebe (16) ein- oder mehrstufige Planetenvorstufen (18) einsetzbar sind.

10. Kegelradgetriebe nach wenigstens einem der Ansprüche 1 bis 9, **dadurch gekennzeichnet, dass** an das Rumpfkegelradgetriebe (1) im Bereich des Kegelrades (4), insbesondere der Universalschnittstelle (I) des Abtriebselementes (6) gegenüberliegend, unterschiedliche Deckelelemente (9) anschließbar sind.

11. Kegelradgetriebe nach Anspruch 10, **dadurch gekennzeichnet, dass** das Deckelelement (9) geschlossen ausgebildet oder mit mindestens einer Öffnung (10) versehen ist.

12. Kegelradgetriebe nach wenigstens einem der Ansprüche 2 bis 11, **dadurch gekennzeichnet, dass** an die Universalschnittstelle (I) des Rumpfkegelradgetriebes (1) unterschiedliche Abtriebselemente (6) mit individuellen Kinematiken, z. B. ausgeführt als Abtriebswellen, Abtriebshohlwellen, ein- oder mehrstufige Übersetzungs- oder Untersetzungsgetriebe, universell anschließbar sind.

## Claims

1. Bevel gear transmission having a driving element (12), which cooperates with a fuselage bevel gear transmission (1), via which a driven element (6) is drivable, whereby the driving element (12) can communicate with the fuselage bevel gear transmission (1) by means of a universal interface (II), with which differently selectable drives (16), such as, for example, an engine mounting assembly (17) or a provisional planetary stage (18), can communicate, the driving element (12) being insertable with a bevel gear shaft (15) into the fuselage bevel gear transmission (1), the bevel gear shaft (15) co-operating with the bevel gear (4) of the fuselage bevel gear transmission (1) and, at the other end of the bevel gear shaft (15), a universal interface (II) is provided, for the insertion of any desirable drives (16), in the form of an engine mounting assembly (17) or a provisional planetary stage (18) the drive (16) or respectively the engine mounting assembly (17) or the provisional planetary stage (18) being centred, via the housing (14) of the driving element (12), in the region of the universal interface (II), and the bevel gear shaft (15) of the driving element (12), engaging in a corresponding driven shaft (21) of the drive (16), or respectively co-operating therewith, **characterised in that** the engine mounting assembly (17) or the provisional planetary stage (18), features a shaft coupling (19), as a drive (16), wherein a shaft flange (20) connects to the shaft coupling (19), for the insertion of any motor.

2. Bevel gear transmission according to claim 1, **characterised in that** the fuselage bevel gear transmission (1) is provided on the driven side with a universal interface (I) for the flange-mounting of any desirable driven elements (6).

3. Bevel gear transmission according to claim 2, **characterised in that** the driven stages (8) are in the form of stepping-up stages for different outputs, e.g. in respect of the driven flange (25) or driven shaft (24).

4. Bevel gear transmission according to claim 2, **characterised in that** the driven stages (8) are in the form of stepping-down stages for different outputs, e.g. in respect of the driven flange (25) or driven shaft (24).

5. Bevel gear transmission according to at least one of claims 1 to 4, **characterised in that** the driven elements (6), more especially the flanges (23) thereof, are connectable to the universal interface (I) of the fuselage bevel gear transmission (1), more especially to the housing (2) thereof, a shaft (22) being fixedly or re-releasably connectable to the bevel gear (4) of the fuselage bevel transmission (1).

6. Bevel gear transmission according to at least one of claims 1 to 4, **characterised in that** different driven elements (6) specific to the user, in different sizes, can communicate with one and the same universal interface (I) of the universal fuselage bevel gear transmission (1).

7. Bevel gear transmission according to at least one of claims 1 to 6, **characterised in that** an engine mounting assembly (17), designed as the drive (16), is provided with a shaft, shaft coupling (19) and a shaft flange (20).

8. Bevel gear transmission according to at least one of claims 1 to 7, **characterised in that** the provisional planetary stage (18), in the form of the drive (16), has a housing, which is connectable to the housing (14) of the drive (12), more especially the universal interface (II) of the drive (12), and, more especially, it can be centred, the bevel gear shaft (15) of the drive (12) engaging in a driven shaft (21) of the provisional planetary stage (18).

9. Bevel gear transmission according to the at least one of claims 1 to 8, **characterised in that** single-stage or multiple-stage provisional planetary stages (18) are insertable into the driving element (12), as drives (16).

10. Bevel gear transmission according to at least one of claims 1 to 9, **characterised in that** different cover elements (9) can communicate with the fuselage bevel gear transmission (1) in the region of the bevel gear (4), more especially opposite the universal interface (I) of the driven element (6).

11. Bevel gear transmission according to claim 10, **characterised in that** the cover element (9) has a closed configuration or is provided with at least one opening (10).

12. Bevel gear transmission according to at least one of claims 2 to 11, **characterised in that** different driven elements (6) with individual kinematics, e.g. designed as driven shafts, driven hollow shafts, single-stage or multiple-stage stepping-up or stepping-down transmissions, can communicate universally with the universal interface (I) of the fuselage bevel gear transmission (1).

## Revendications

1. Engrenage conique avec un élément d'entraînement (12) qui coopère avec un engrenage conique de corps (1), par l'intermédiaire duquel peut être entraîné un élément de sortie (6), pouvant à l'engrenage conique de corps (1) pouvant avec une interface universelle (II) à laquelle peuvent être raccordés des entraînements (16) sélectionnables différemment, tels que par exemple un groupe moteur (17) ou un étage planétaire préliminaire (18), l'élément d'entraînement (12) avec un arbre de roue conique (15) pouvant être introduit dans l'engrenage conique de corps (1), l'arbre de roue conique (15) coopérant avec la roue conique (4) de l'engrenage conique de corps (1), et à l'autre extrémité de l'arbre de roue conique (15) étant prévue une interface universelle (II) destinée à l'introduction d'entraînements quelconques (16), réalisés sous forme de groupe moteur (17) ou d'étage planétaire préliminaire (18) au-dessus du boîtier (14) de l'élément d'entraînement (12) étant centré, à l'endroit de l'interface universelle (II), l'entraînement (16) ou le groupe moteur (17) ou l'étage planétaire préliminaire (18) et dans un arbre de sortie (21) correspondent de l'entraînement (16) s'engageant ou coopérant avec cet dernier l'arbre de roue conique (15) de l'élément d'entraînement (12), **caractérisé par le fait que** le groupe moteur (17) ou l'étage planétaire préliminaire (18) est pourvu, comme entraînement, d'un accouplement d'arbre (19), auquel un bride d'arbre (20) est raccordé pour accueillir un moteur quelquonque.

2. Engrenage conique selon la revendication 1, **caractérisé par le fait que** l'engrenage conique de corps (1) est pourvu, du côté de sortie, d'une interface universelle (I) destinée à la connexion par bride d'éléments de sortie (6) arbitraires.

3. Engrenage conique selon la revendication 2, **caractérisé par le fait que** les étages de sortie (8) sont réalisés sous forme d'étages multiplicateurs pour différentes sorties, par example en ce qui concerne la bride de sortie (25) ou l'arbre de sortie (24).

4. Engrenage conique selon la revendication 2, **caractérisé par le fait que** les étages de sortie (8) sont réalisés sous forme d'étages réducteurs pour différentes sorties, par exemple en ce qui concerne la bride de sortie (25) ou l'arbre de sortie (24).

5. Engrenage conique selon au moins l'une des revendications 1 à 4, **caractérisé par le fait que** les éléments de sortie (6), en particulier leurs brides (23), peuvent être connectés à l'interface universelle (I) de l'engrenage conique de corps (1), en particulier son boîtier (2), un arbre (22) pouvant être connecté de manière fixe ou amovible à la roue conique (4) de l'engrenage conique de corps (1).

6. Engrenage conique selon au moins l'une des revendications 1 à 4, **caractérisé par le fait que** différents éléments de sortie (6) peuvent être raccordés de manière spécifique à l'utilisateur en grandeur différente à une même interface universelle (I) de l'engrenage conique de corps universel (1).

7. Engrenage conique selon au moins l'une des revendications 1 à 6, **caractérisé par le fait qu'**un groupe moteur (17) réalisé sous forme d'entraînement (16) est pourvu d'un arbre, d'un accouplement d'arbre (19) et d'une bride d'arbre (20).

8. Engrenage conique selon au moins l'une des revendications 1 à 7, **caractérisé par le fait que** l'étage planétaire préliminaire (18) réalisé sous forme d'entraînement (16) présente un boîtier pouvant être assemblé, en particulier centré, avec le boîtier (14) de l'entraînement (12), en particulier l'interface universelle (II) de l'entraînement (12), dans un arbre de sortie (21) de l'étage planétaire préliminaire (18) s'engageant l'arbre de roue conique (15) de l'entraînement (12).

9. Engrenage conique selon au moins l'une des revendications 1 à 8, **caractérisé par le fait que** dans l'élément d'entraînement (12) peuvent être placés, comme entraînements (16), des étages planétaires préliminaires à un ou plusieurs étages (18).

10. Engrenage conique selon au moins l'une des revendications 1 à 9, **caractérisé par le fait qu'**à l'engrenage conique de corps (1) peuvent être raccordés, à l'endroit de la roue conique (4), en particulier au droit de l'interface universelle (I) de l'élément de sortie (6), différents éléments de recouvrement (9).

11. Engrenage conique selon la revendication 10, **caractérisé par le fait que** l'élément de recouvrement (9) est réalisé fermé ou est muni d'au moins une ouverture (10).

12. Engrenage conique selon au moins l'une des revendications 2 à 11, **caractérisé par le fait qu'**à l'interface universelle (I) de l'engrenage conique de corps (1) peuvent être raccordés de manière universelle différents éléments de sortie (6) à cinématiques individuelles, par example réalisés sous forme d'arbres de sortie, d'arbres de sortie creux, d'engrenages multiplicateurs ou réducteurs à un ou plusieurs étages.
